# EUROPEAN PATENT APPLICATION

(11) **EP 4 685 073 A1**
(43) Date of publication of application: **28.01.2026**
(21) Application number: 25187696.7
(22) Date of filing: 06.07.2025
(51) Int. Cl.: B65D 41/62, C09D 167/04, C08L 5/00, C08L 67/04

(54) **PHA FILM FOR BIOCOMPATIBLE AND BIODEGRADABLE SEALING OF CONTAINERS AND BOTTLES**

(30) Priority: 24.07.2024 IT 202400017188
(71) Applicant: Ubiquitt s.r.l. unipersonale, 36042 Breganze (IT)
(72) Inventor: Tagliapietra, Gianni, Breganze (VI) (IT)
(74) Representative: Leganza, Alessandro

(57) **Abstract**

The present invention relates to the sealing of a container and/or bottle using a PHA-based film and a process for its production.

## Description

### TECHNICAL FIELD

The present invention relates to biocompatible and biodegradable sealing of containers and bottles using polyhydroxyalkanoate (PHA)-based films.

### STATE OF THE ART

The sealing of containers, particularly wine and spirits bottles, is of significant importance on several aspects. The first is to represent the seal of food safety. If the seal is opened or removed, in fact, it means that the container has already been opened. The second is to prevent the excessive passage of air between the contents of the bottle or container and the external environment. The third is purely aesthetic, since the sealing can be customized and be an embellishment of the container itself.

In the case of wine and spirits bottles, sealing is provided by means of capsules. Currently, the three main products on the market are: heat-shrinkable PVC capsules, aluminum polylaminate capsules (a kind of "sandwich" of aluminum and polyethylene, in which the polyethylene is coated on the outside with aluminum), and tin capsules.

These products are derived in whole or in part from raw materials of non-renewable fossil origin. Even where such materials are, at least theoretically, recyclable, their actual recycling is in fact very complicated and implausible, given the ephemeral consistency of such capsules.

Sealing capsules in fact weigh very few grams and are spread over a very large surface area, which makes them difficult to process in recycling facilities that require a minimum mass to recognize and sort materials. In addition, the user may not be able to recognize the composition of said capsules and therefore not deliver them to the appropriate container for recycling.

Given the ephemeral consistency of such capsules, moreover, their abandonment in the environment by the user is to be considered rather likely, thus constituting a further aggravation of the non-sustainability of the capsules themselves.

The need to design alternative and sustainable materials in every area of technology is a response to an increased global awareness of environmental protection and the need for a transition to a circular economy.

Bioplastics have been and are still being studied in this regard, since they possess the unique advantage over conventional plastics of reducing dependence on fossil resources and reducing greenhouse gas emissions. They are also biocompatible and biodegradable materials.

One of the most studied categories of bioplastics is represented by polyhydroxyalkanoates (PHA).

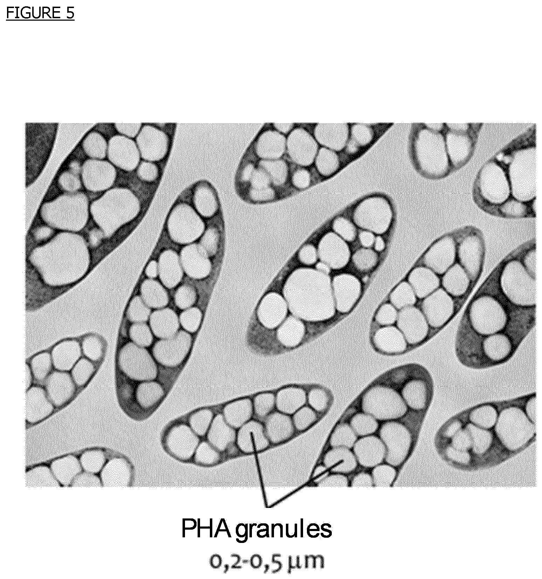

PHAs are intracellular products of several bacterial species belonging mainly to the genera Bacillus, Rhodococcus, Ralstonia, and Pseudomonas and are obtained by fermentation using sugars or lipids as substrates (Verlinden, R. A. J., Hill, D. J., Kenward, M. A., Williams, C. D., & Radecka, I. (2007). Bacterial synthesis of biodegradable polyhydroxyalkanoates. Journal of Applied Microbiology, 102(6), 1437-1449). These linear macromolecules, under particular culture conditions, such as the absence of certain nutrients such as nitrogen, phosphorus and sulfur, are accumulated by the bacteria as a carbonaceous reserve source in the form of granules (Figure 5). The granules can reach high concentrations, even up to 90 percent of the dry weight of the bacterial mass. The composition of polyhydroxyalkanoates varies widely and depends on the type of bacteria from which they are synthesized, as well as the culture matrix.

At least 150 monomers are known, thus generating a wide variety of biopolymers. The main ones are : PHB (Polyhydroxybutyrate), PHBV (Polyhydroxybutyrate-co-valerate), PHBH (Polyhydroxybutyrate-co-hexanoate), P3HB (Poly-3-hydroxy butyrate), PHBHHx (Polyhydroxybutyrate-co-hydroxyhexanoate), PHA high-molecular-weight copolymers, PHB4B (Polyhydroxybutyrate-co-4-hydroxybutyrate), PHO (Polyhydroxy octanoate), long-chain PHAs, PHBVHHx (Polyhydroxybutyrate-co-valerate-co-hexanoate), PHBHH (Polyhydroxybutyrate-co-3-hydroxyhexanoate), PHB4HV (Polyhydroxy butyrate-co-4-hydroxyvalerate), PHB-co-HHx (Polyhydroxy butyrate-co-3-hydroxy hexanoate), PHA copolymers with aromatic monomers, PHB-co-HHx-co-HO (Polyhydroxybutyrate-co-3-hydroxyhexanoate-co-3-hydroxy octanoate), PHA copolymers with ether monomers, PHB-co-HV-co-HA (Polyhydroxybutyrate-co-3-hydroxyvalerate-co-3-hydroxy alkanoate), PHA based on lactic acid.

This high variety allows the production of biopolymers with even very different chemical and physical properties.

One of the most interesting properties of PHAs is their biodegradability and the nontoxic nature of the degradation products. Biodegradation is the degradation of a compound through enzymatic processes, usually by the action of microorganisms such as bacteria and fungi. Studies have been conducted on the biodegradation of, for example, PHB and P(HB-co-HHx) in a wide range of natural and controlled conditions such as soil, mangrove swamps, river water, seawater, activated sludge, anaerobic sludge, and aerobic and anaerobic compost. PHAs are able to degrade rapidly in aerobic, anaerobic and saline environments. In the case of biodegradation under aerobic conditions, the end products of PHB and P(HB-coHHx) are carbon dioxide and water, while under anaerobic conditions the degradation products are methane, water and biomass (Muhammadi, Shabina, Afzal, M., & Hameed, S. (2015). Bacterial polyhydroxyalkanoates-ecofriendly next generation plastic: Production, biocompatibility, biodegradation, physical properties and applications. Green Chemistry Letters and Reviews, 8(3-4), 5677).

Unfortunately, the success of biodegradable polymers such as PHAs has been limited by several factors. First, their properties are generally inferior to their non-biodegradable counterparts. They are also extremely sensitive to the way they are stored, processed and used. In fact, the production of biodegradable polymer parts requires not only the search for a plastic with suitable properties, but also considerable work to fine-tune processing conditions to minimize any loss of these properties.

To the Applicant's knowledge, bioplastics have never been reported to be used for sealing containers or bottles, or to be used as sealing capsules.

In light of this, there is therefore a need for a sustainable solution for container and bottle sealing that includes biocompatible and biodegradable materials.

### DESCRIPTION OF THE INVENTION

The technical problem solved by the present invention is thus to provide a sustainable method for sealing containers and bottles comprising biocompatible and biodegradable materials.

This problem is solved by the use of a polyhydroxyalkanoate (PHA)-based film for sealing containers and bottles.

Specifically, the subject matter of the present invention relates to a process for sealing a container using a PHA-based film comprising the following steps:
a) preparing a solution, emulsion, dispersion or suspension comprising PHA in a solvent;
b) applying the solution, emulsion, dispersion, or suspension obtained in step a) on at least a portion of the surface of the container and/or bottle to be covered with the sealing film;
c) drying of the solution, emulsion, dispersion or suspension applied in step b) by evaporation of the solvent to obtain the PHA-based sealing film on the container and/or bottle.

As a further aspect, the present invention also relates to a composition comprising PHA and Xanthan gum in a weight ratio between 600/1 and 30/1 w/w, and the use of such a composition for the sealing of containers or bottles.

The present invention also relates to bottles or containers sealed by means of a film comprising PHA.

Other advantages and forms of embodiment of the present invention will be apparent from the detailed description below.

### FIGURES

Figure 1: Closed bottles equipped with a cap before application of the PHA film subject of the present invention.
Figure 2: Closed bottles equipped with a cap just after application of the PHA film object of the present invention and before drying of said film.
Figure 3: Closed bottles equipped with a cap after application of the PHA film object of the present invention and after drying of said film.
Figure 4: Appearance of the edge of a closed bottle equipped with a cap before application of the PHA film object of the present invention (A), after application of said film (B) (before drying) and after drying of said film (C).
Figure 5: Electron microscope photograph of a bacterial cell with polyhydroxyalkanoate (PHA) intracellular granules in evidence.
Figure 6: Schematic representation of application by spray of the film object of the present invention for sealing bottles equipped with a flush cap with the bottle neck.
Figure 7: Schematic representation of the application by spray of the film object of the present invention for sealing bottles equipped with a T-cap or mushroom cap.
Figure 8: Schematic representation of the result of the application by dipping of the film object of the present invention for sealing bottles equipped with a flush cap (A) or a T-cap or mushroom cap (B).

### DETAILED DESCRIPTION OF THE INVENTION

The object of the present invention relates to a process for sealing a container and/or bottle using a PHA-based film comprising the following steps:
a) preparing a solution, emulsion, dispersion or suspension comprising PHA in a solvent;
b) applying the solution, emulsion, dispersion or suspension obtained in step a) on at least a portion of the surface of the container and/or bottle to be covered with the sealing film;
c) drying of the solution, emulsion, dispersion or suspension applied in step b) by evaporation of the solvent to obtain the PHA-based sealing film on the container and/or bottle.

Indeed, it has been surprisingly found that by applying a solution, emulsion, dispersion, or suspension comprising PHA to the edge of the surface of the container to be sealed and then evaporating the solvent at the end of the application, it is possible to achieve the coating of a PHA-based film that enables the sealing of that container and/or bottle.

The term solution means a homogeneous dispersion of two or more chemical species, in varying proportions as desired.

The term emulsion denotes a dispersion of one liquid in the form of minute particles in another, in which said particles remain completely (or nearly so) insoluble.

The term dispersion denotes a heterogeneous system consisting of two or more phases, in which one of them (dispersing phase) is in predominant quantity and disperses the other(s) (dispersed phases).

The term suspension means a mixture of heterogeneous substances consisting of a finely divided solid state component dispersed in a liquid.

The terms "includes," "comprising," or any variation thereof, as understood herein, are intended to cover a nonexclusive inclusion, such that a process, use, or apparatus comprising a list of elements does not include only those elements but may include other elements not expressly listed or inherent in that process, use, or apparatus.

Thus, according to the present invention, by applying a solution, emulsion, dispersion, or suspension comprising PHA to the edge of the neck of a bottle equipped with a cap and then evaporating the solvent at the end of application, it is possible to obtain a seal similar to that obtainable by commercially available capsules.

The PHA-based film in fact allows protection of the contents from dirt and external agents, provides a barrier to moisture and oxygen, and is at the same time very flexible and easy to remove by mechanical action by the consumer when the container itself is opened.

Unlike commercially available capsules, however, the PHA film subject of the present invention involves the use of 100% bio-based raw materials and is a fully biodegradable and compostable material in all types of environments: soil, fresh water, seawater, industrial compost, home compost, landfills, or anaerobic digesters.

Since this material degrades under any condition of abandonment, moreover, the environmental problem is solved in case of abandonment of the seal in the environment by the end consumer.

The PHA film covered by the present invention is also totally sustainable, since the CO₂ emitted during degradation is equivalent to that absorbed during production of the material. In addition to this, waste that cannot be used for human food use can be used as raw material for the production of the polymer, making the product non-food-conflict.

The PHA film covered by the present invention is also suitable for food contact, making it a completely safe material for use in the food industry.

Surprisingly, sealing by means of PHA-based films object of the present invention provides better protection than sealing by means of common caps known in the state of the art, since it realizes a perfect and intimate adhesion between glass and cap. At the same time, however, due to its chemical and physical properties, it maintains a certain permeability to gases, thus allowing the proper preservation and evolution of the product, without affecting its quality.

According to a preferred aspect, the solvent of step a) is water.

According to a preferred aspect, the solution, emulsion, dispersion or suspension of PHA of step a), is obtained by dispersing PHA in water.

According to a particularly preferred aspect, the solution, emulsion, dispersion or suspension of PHA of step a), is an emulsion of PHA in water.

According to another preferred aspect, the solution, emulsion, dispersion, or suspension of PHA of step a), is obtained by dispersing PHA in water at a concentration of PHA between 45% and 60% w/w calculated by considering the weight of PHA on a dry basis relative to the weight of the solution.

Percent weight concentration (% w/w) in this document means the weight in grams of a substance relative to 100 grams of solution, emulsion, dispersion, or suspension. Thus, for example, a solution, emulsion, dispersion, or suspension having a 45% w/w concentration of PHA means that 45 grams of PHA is dissolved in 100 grams of solution, emulsion, dispersion, or suspension.

The expression weight of PHA on a dry basis means the weight of PHA that remains after removal of the solvent from the solution, emulsion, dispersion, or suspension.

To the solution, emulsion, dispersion, or suspension comprising PHA from step a), Xanthan gum may be added in a percentage comprised between 0.1% and 1.5% w/w relative to the weight of the solution, in order to make that solution thicker and more viscous. This additive makes it possible to adapt the characteristics of the PHA-based solution, emulsion, dispersion, or suspension to the type of application chosen, and at the same time to modulate the properties of the resulting seal, making it thicker or thinner, according to different functional and aesthetic requirements.

Upon opening the container or uncorking the bottle, the removal of the seal subject of the present invention occurs instantaneously, simply by exerting a slight additional pressure to break the film-seal.

Should it be desired to achieve a "peelable" effect, that is, to make the film suitable for mechanical removal in whole or in part by ridding the container of residues of the same, a wax, such as paraffin wax, soy wax, beeswax, palm wax, gel wax, coconut wax, carnauba wax, or stearin may be added to the solution, emulsion, dispersion, or suspension comprising PHA of step a).

It is also possible to add a dye to the solution, emulsion, dispersion or suspension comprising PHA of step a) so as to make a coloured film according to packaging or marketing needs.

According to a preferred aspect, therefore, object of the present invention is a process for sealing a container using a PHA-based film wherein the solution, emulsion, dispersion or suspension prepared in step a) further comprises Xanthan gum in an amount between 0.1% and 1.5% w/w relative to the solution.

According to another preferred aspect, object of the present invention is a process for sealing a container using a PHA-based film wherein the solution, emulsion, dispersion, or suspension prepared in step a) further comprises a wax selected from the group including paraffin wax, soy wax, beeswax, palm wax, gel wax, coconut wax, carnauba wax, or stearin.

According to an even more preferred aspect, object of the present invention is a process for sealing a container using a PHA-based film wherein the solution, emulsion, dispersion, or suspension prepared in step a) further comprises a wax selected from the group comprising beeswax, carnauba wax, soy wax, or palm wax.

According to another preferred aspect, object of the present invention is a process for sealing a container using a PHA-based film wherein the solution, emulsion, dispersion, or suspension prepared in step a) further comprises Xanthan gum in an amount between 0.1% and 1.5% w/w with respect to the solution and/or a wax selected from the group comprising paraffin wax, soy wax, bees wax, palm wax, gel wax, coconut wax, carnauba wax, or stearin.

According to an even more preferred aspect, object of the present invention is a process for sealing a container using a PHA-based film wherein the solution, emulsion, dispersion or suspension prepared in step a) further comprises Xanthan gum in an amount between 0.1% and 1.5% w/w with respect to the solution and/or a wax selected from the group comprising soy wax, beeswax, palm wax or carnauba wax.

According to an even more preferred aspect, object of the present invention is a process for sealing a container using a PHA-based film wherein the solution, emulsion, dispersion or suspension prepared in step a) further comprises Xanthan gum in an amount between 0.1% and 1.5% w/w with respect to the solution and/or colouring additives and/or a wax selected from the group comprising paraffin wax, soy wax, beeswax, palm wax, gel wax, coconut wax, carnauba wax or stearin.

According to an even more preferred aspect, object of the present invention is a process for sealing a container using a PHA-based film wherein the solution, emulsion, dispersion or suspension prepared in step a) further comprises Xanthan gum in an amount of between 0.1% and 1.5% w/w with respect to the solution and/or colour additives and/or a wax selected from the group comprising soy wax, beeswax, palm wax or carnauba wax.

As used herein, the term "and/or", when used in a list of two or more items, means that any one of the listed items may be used alone, or in any combination of two or more of the listed items.

For example, if a composition is described as containing components A, B and/or C, the composition may contain A only; B only; C only; A and B in combination; A and C in combination; B and C in combination; or A, B and C in combination.

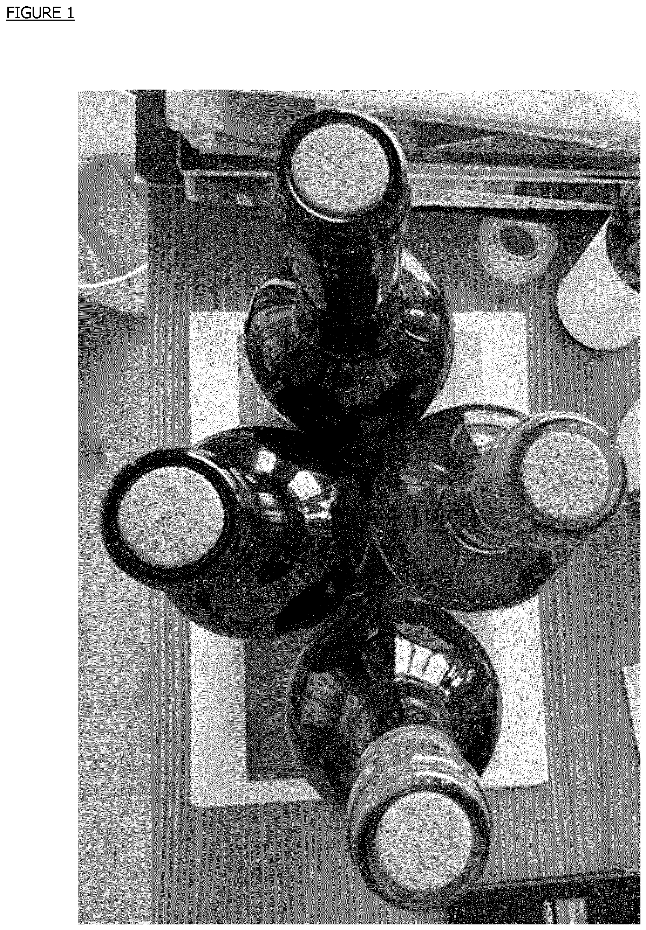

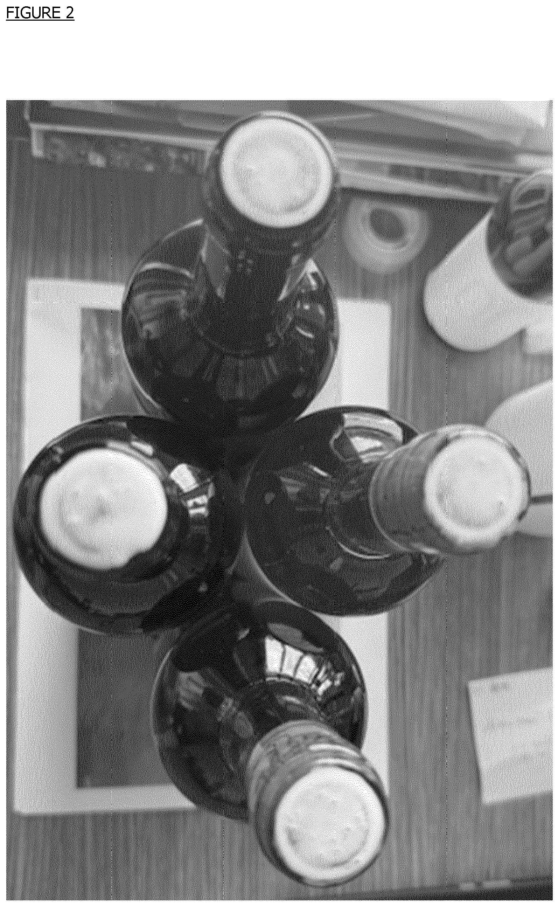

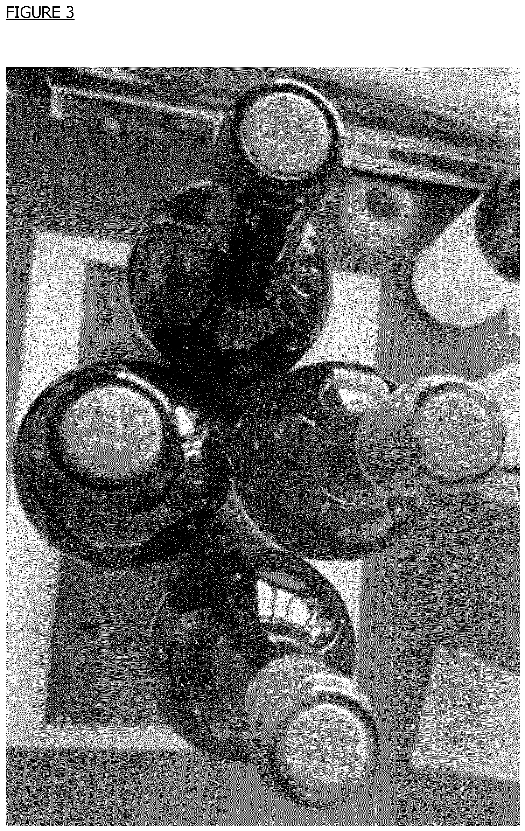

A container sealable by the present invention is for example a bottle (Figure 1). When applied to the surface to be sealed as reported in step b), the solution, emulsion, dispersion or suspension appears milky in color (Figure 2), but once dried as per step c), the film appears completely transparent or slightly cloudy (Figure 3).

According to a preferred aspect, the present invention relates to a process for sealing a container using a PHA-based film wherein the at least one portion of the surface portion of the container in step b) is constituted by the edge at the opening of a bottle.

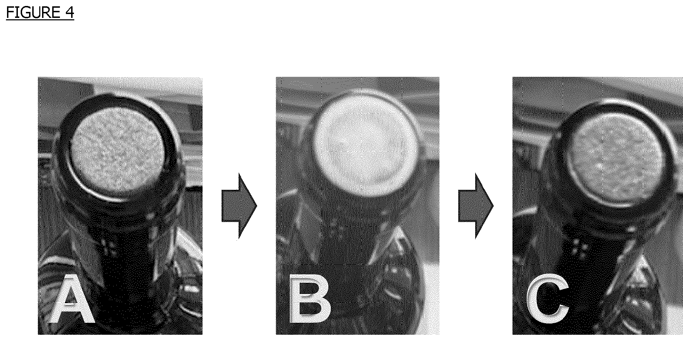

As highlighted in Figure 4, in fact, it is possible to seal the opening of a closed bottle equipped with a cap (Figure 4-A) by applying the solution, emulsion, dispersion or suspension of step a) on the edge of the bottle at its opening (Figure 4-B) and carry out the sealing by drying the solution (Figure 4-C).

Based on aesthetic or marketing needs, it is also possible to cover with the sealing film, in addition to the edge at the opening, also a part of the neck of the bottle.

According to a preferred aspect, therefore, the present invention relates to a process for sealing a container using a PHA-based film wherein the at least a portion of the surface of the container in step b) consists of the edge corresponding to the opening of the bottle and to part of the neck of the same bottle.

According to a preferred aspect, therefore, the present invention relates to a process for sealing a container using a PHA-based film wherein the at least a portion of the surface of the container in step b) consists of the top and the upper part of the neck of a closed bottle equipped with a cap, wherein the upper part of a bottle is intended to be the part towards which the opening of said bottle is located.

According to another preferred aspect, the present invention relates to a process for sealing a container using a PHA-based film wherein the at least a portion of the surface of the container in step b) consists of the edge at the opening of said container.

According to another preferred aspect, the present invention relates to a process for sealing a container using a PHA-based film wherein the at least a portion of the surface of the container in step b) consists of the edge corresponding to the opening of the closed container provided with a lid.

According to another preferred aspect, the present invention relates to a process for sealing a container using a PHA-based film wherein the at least a portion of the surface of the container in step b) comprises cellulosic and/or polymeric and/or metallic and/or glassy material.

According to a preferred embodiment, in step b) the application of the solution, emulsion, dispersion or suspension is performed by one of the following methods::
b1) manually using a brush;
b2) by spray technique, using a gun comprising a nozzle regulated by compressed air with a pre-established dispensing and shuttering time;
b3) by immersing the portion of the surface of the container that is intended to be coated.

According to a preferred aspect, the container is a bottle.

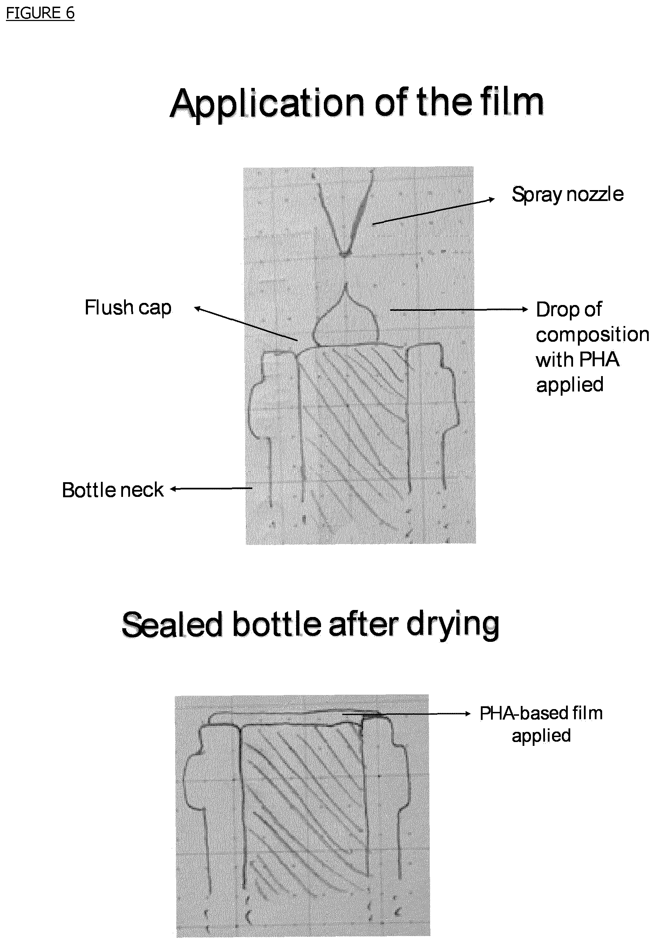

According to a particularly preferred aspect, in step b2), the application of the solution, emulsion, dispersion or suspension comprising PHA by means of a spray technique is performed, as illustrated in Figure 6, on a bottle equipped with a cap flush with the neck of the bottle, i.e. on a bottle capped in such a way that the cap is entirely included inside the neck of the bottle itself and the upper part is at the same level as the edge of the neck of the bottle. In this case, the spray deposits a drop of solution, emulsion, dispersion or suspension comprising PHA according to the present invention, which is distributed on the portion of the surface of the cap exposed to the air and on the edge of the neck of the bottle, then partially dripping along the neck of the bottle itself.

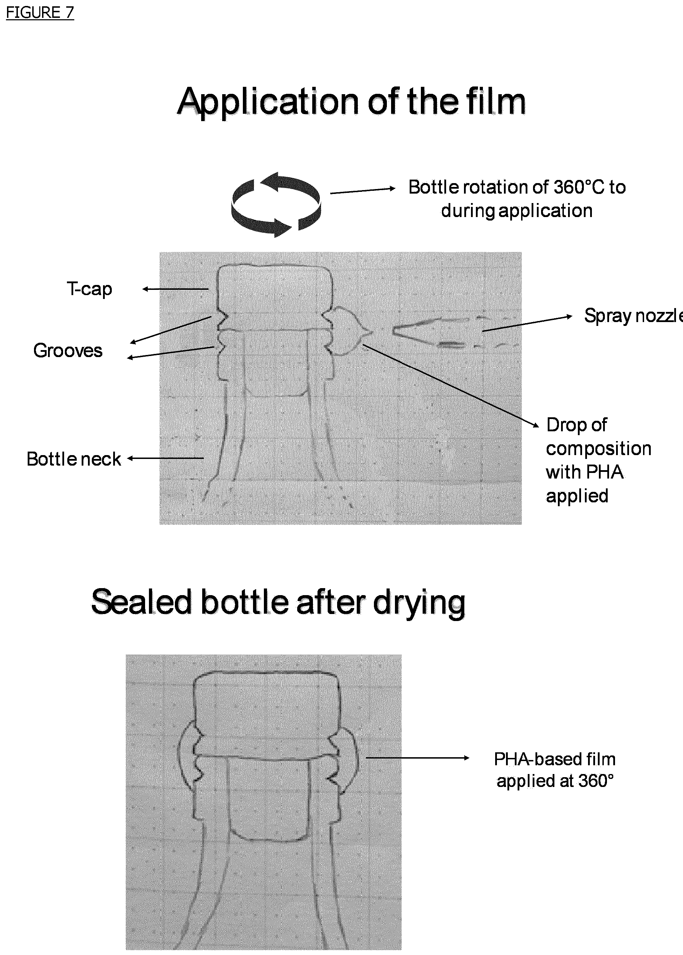

According to another preferred aspect, in step b2), the application of the solution, emulsion, dispersion or suspension comprising PHA by spray technique is carried out, as illustrated in Figure 7, on a bottle fitted with a so-called T-cap or mushroom cap, i.e., on a bottle capped in such a way that the lower part of the cap, of section corresponding to the inner section of the edge of the bottle neck, is on the inside of the bottle neck, and the upper section, of section equal to or greater than the outer section of the bottle neck, is on the outside, with the edge of the upper part of the stopper adhering to the edge of the bottle neck. The spray in this case deposits a drop of solution, emulsion, dispersion or suspension comprising PHA according to the present invention, which is distributed on the portion of the cap surface exposed to air and on the edge of the bottle neck, then partially dripping down the neck of the bottle. As depicted in Figure 7, both the neck of the bottle and the top of the cap can have a groove along each section, which is useful for improving the adhesion and seal of the seal to be deposited. The spray, in this case, applies the solution, emulsion, dispersion or suspension that is the subject of the present invention to the junction point between the bottle and the cap, while the bottle, held horizontally and perpendicular to the spray nozzle, is rotated 360° about its axis. In this way, the spray deposits the solution, emulsion, dispersion or suspension along the entire circumference corresponding to the edge section of the bottle at the junction between bottle and cap.

According to another preferred aspect, in step b) the application of the solution, emulsion, dispersion for sealing a bottle is performed by immersing the neck of the bottle from the cap side for a length equivalent to the coverage that is to be obtained with the film, keeping the bottle immersed for a predetermined time in the solution, emulsion, dispersion or suspension obtained in step a), and finally extracting said bottle from the solution, emulsion, dispersion or suspension.

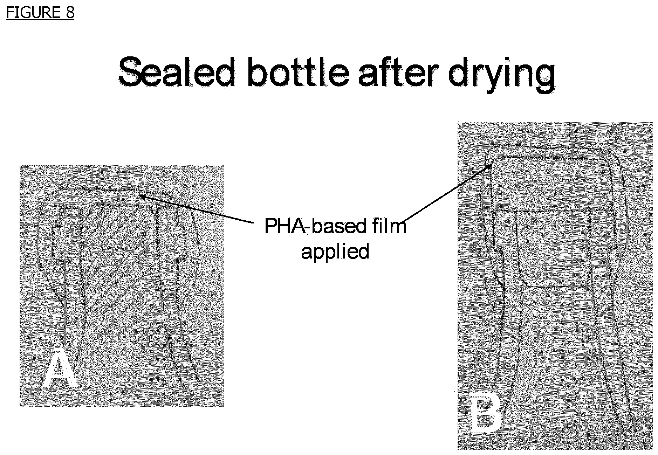

According to a particularly preferred aspect, in step b3), the application of the solution, emulsion, dispersion or suspension comprising PHA by immersion is performed, as illustrated in Figure 8, by immersing the neck of the bottle, equipped with a cap flush with the neck of the bottle (Figure 8-A) or equipped with a T- or mushroom-shaped cap (Figure 8-B), in the solution, emulsion, dispersion or suspension comprising PHA according to the present invention from the cap side for a length equivalent to the coverage that is to be obtained with the film.

To obtain a better technical result, it is possible to combine the process object of the present invention with the cold plasma sanitization technique.

In the food sector, sanitization is a fundamental phase to avoid bacterial contamination. Sanitization by cold plasma is based on the principle of advanced oxidation which is carried out through the innovative technology called "Non-Thermal-Plasma" or "NTP", which uses the so-called "non-thermal discharges with dielectric barrier method" or "DBD". Since this sanitization technique does not involve the use of any chemical compound, the treatment can be considered totally ecological.

According to a preferred aspect of the present invention, cold plasma sanitization is applied during the application phase of the solution, emulsion, dispersion or suspension comprising PHA, so as to prevent any form of bacterial contamination during the sealing of the container.

According to a preferred aspect, therefore, in step b) the application of the solution, emulsion, dispersion or suspension is performed with simultaneous treatment of the container with cold plasma.

According to a preferred aspect, when the container is a bottle, cold plasma sanitization is performed for all the phases ranging from before capping, to capping, to the application of the sealing object of the present invention.

According to a preferred aspect, in step c) drying is performed using one of the following methods:
c1) by air;
c2) by inserting the container into a forced hot air drying system;
c3) by inserting the container into a radio frequency drying system.

According to a preferred aspect, once dry, the film obtained by the process which is the object of the present invention has a hardness, expressed according to the Shore A scale, of between 55 and 85.

A preferred aspect of the present invention therefore concerns a process for sealing bottles and/or containers by means of a film comprising PHA and having a hardness, expressed according to the Shore A scale and determined on the dry film, of between 55 and 85.

The invention also concerns a bottle and/or container sealed by means of a film comprising PHA and having a hardness, expressed according to the Shore A scale and determined on the dry film, of between 55 and 85.

Another aspect of the present invention relates to a composition comprising PHA and Xanthan gum in a weight ratio between 600/1 and 30/1 w/w.

According to a preferred aspect, the present invention relates to a composition comprising PHA and a wax selected from the group comprising paraffin wax, soy wax, beeswax, palm wax, gel wax, coconut wax, carnauba wax or stearin.

According to an even more preferred aspect, the present invention relates to a composition comprising PHA and a wax selected from the group comprising soy wax, beeswax, palm wax or carnauba wax.

According to another preferred aspect, the present invention relates to a composition comprising PHA, Xanthan gum in a weight ratio of 600/1 to 30/1 w/w and a wax selected from the group comprising paraffin wax, soy wax, beeswax, palm wax, gel wax, coconut wax, carnauba wax or stearin.

According to an even more preferred aspect, the present invention relates to a composition comprising PHA, Xanthan gum in a weight ratio of 600/1 to 30/1 w/w and a wax selected from the group comprising soy wax, beeswax, palm wax or carnauba wax.

Another aspect of the present invention relates to the use of a composition comprising PHA and Xanthan gum in a weight ratio of 600/1 to 30/1 w/w for sealing bottles and/or containers.

Another aspect of the present invention relates to the use of a composition comprising PHA and a wax selected from the group comprising paraffin wax, soy wax, beeswax, palm wax, gel wax, coconut wax, carnauba wax or stearin for sealing bottles and/or containers.

Another aspect of the present invention relates to the use of a composition comprising PHA and a wax selected from the group comprising soy wax, beeswax, palm wax or carnauba wax for sealing bottles and/or containers.

Another aspect of the present invention relates to the use of a composition comprising PHA, Xanthan gum in a weight ratio of 600/1 to 30/1 w/w and a wax selected from the group comprising paraffin wax, soy wax, beeswax, palm wax, gel wax, coconut wax, carnauba wax or stearin for sealing bottles and/or containers.

Another aspect of the present invention relates to the use of a composition comprising PHA, Xanthan gum in a weight ratio of 600/1 to 30/1 w/w and a wax selected from the group comprising soy wax, beeswax, palm wax or carnauba wax for sealing bottles and/or containers.

Another aspect of the present invention relates to the use of a composition comprising PHA, Xanthan gum in a weight ratio of 600/1 to 30/1 w/w, a colorant and a wax selected from the group comprising paraffin wax, soy wax, beeswax, palm wax, gel wax, coconut wax, carnauba wax or stearin for sealing bottles and/or containers.

Another aspect of the present invention relates to the use of a composition comprising PHA, Xanthan gum in a weight ratio of 600/1 to 30/1 w/w, a colorant and a wax selected from the group comprising soy wax, beeswax, palm wax or carnauba wax for sealing bottles and/or containers.

The present invention also relates to a bottle and/or container, wherein said bottle and/or container is sealed by means of a film comprising PHA.

The present invention also relates to a bottle and/or container, where the edge at the opening of said bottle and/or container is sealed by means of a film comprising PHA.

The present invention also relates to a bottle and/or container, obtainable by means of the process for sealing based on a PHA film object of the present invention.

The present invention also relates to a bottle and/or container, where said bottle and/or container is sealed by means of a film comprising PHA according to the object of the present invention.

Bottle and/or container, where said bottle and/or container is sealed by means of a film comprising PHA obtainable according to the process object of the present invention.

The present invention also relates to a bottle and/or container, wherein said bottle and/or container is sealed by a composition comprising PHA and Xanthan gum in a weight ratio of between 600/1 and 30/1 w/w.

The present invention also relates to a bottle and/or container, wherein said bottle and/or container is sealed by a composition comprising PHA and a wax selected from the group comprising paraffin wax, soy wax, beeswax, palm wax, gel wax, coconut wax, carnauba wax or stearin.

The present invention also relates to a bottle and/or container, wherein said bottle and/or container is sealed by a composition comprising PHA and a wax selected from the group comprising soy wax, beeswax, palm wax, or carnauba wax.

The present invention also relates to a bottle and/or container, wherein said bottle and/or container is sealed by a composition comprising PHA, Xanthan gum in a weight ratio of 600/1 to 30/1 w/w and a wax selected from the group comprising paraffin wax, soy wax, beeswax, palm wax, gel wax, coconut wax, carnauba wax or stearin.

The present invention also relates to a bottle and/or container, wherein said bottle and/or container is sealed by a composition comprising PHA, Xanthan gum in a weight ratio of 600/1 to 30/1 w/w and a wax selected from the group comprising soy wax, beeswax, palm wax or carnauba wax.

## Claims

1. Process for sealing a container and/or bottle using a PHA-based film including the following steps:
a) preparing a solution, emulsion, dispersion or suspension comprising PHA in a solvent;
b) applying the solution, emulsion, dispersion or suspension obtained in step a) on at least a portion of the surface of the container and/or bottle to be covered with the sealing film;
c) drying of the solution, emulsion, dispersion or suspension applied in step b) by evaporation of the solvent to obtain the PHA-based sealing film on the container and/or bottle.

2. Process according to claim 1, wherein the solution, emulsion, dispersion or suspension prepared in step a) comprises PHA in a quantity between 45% and 60% w/w with respect to the solution, emulsion, dispersion or suspension and further comprises Xanthan gum in a quantity between 0.1% and 1.5% w/w with respect to the solution, emulsion, dispersion or suspension and/or colouring additives and/or a wax selected from the group including paraffin wax, soy wax, beeswax, palm wax, gel wax, coconut wax, carnauba wax or stearin.

3. Process according to anyone of the claims from 1 to 2, wherein the at least a portion of the surface of the container in step b) consists of the edge corresponding to the opening of the bottle.

4. Process according to anyone of the claims from 1 to 3, wherein the at least a portion of the surface of the container in step b) consists of the edge corresponding to the opening of the bottle and to part of the neck of the same bottle.

5. Process according to anyone of the claims from 1 to 4, wherein in step b) the application of the solution, emulsion, dispersion or suspension is carried out using one of the following methods:
b1) manually using a brush;
b2) by spray technique, using a gun comprising a nozzle regulated by compressed air with a pre-established dispensing and shuttering time;
b3) by immersing the portion of the surface of the container that is intended to be coated.

6. Composition comprising PHA and Xanthan gum in a weight ratio between 600/1 and 30/1 w/w.

7. Composition according to claim 6, further comprising a wax selected from the group comprising paraffin wax, soy wax, beeswax, palm wax, gel wax, coconut wax, carnauba wax or stearin.

8. Use of the composition according to any one of the claims from 6 to 7, for the sealing of bottles or containers.

9. Bottle and/or container, wherein said bottle and/or container is sealed by a film comprising PHA or by a composition according to any one of the claims from 6 to 7.

10. Bottle and/or container, wherein said bottle and/or container is sealed by a film comprising PHA obtainable according to the process of any one of the claims from 1 to 5.
